(19)

**Europäisches Patentamt**

**European Patent Office**

**Office européen des brevets**

(11) **EP 3 161 979 B1**

(12) **EUROPEAN PATENT SPECIFICATION**

(45) Date of publication and mention of the grant of the patent:
**13.11.2019 Bulletin 2019/46**

(51) Int Cl.:
*H04B 15/00* *(2006.01)*     *H04L 27/26* *(2006.01)*

(21) Application number: **15729401.8**

(86) International application number:
**PCT/EP2015/062783**

(22) Date of filing: **09.06.2015**

(87) International publication number:
**WO 2016/000915 (07.01.2016 Gazette 2016/01)**

(54) **PHASE NOISE ESTIMATION AND COMPENSATION**

PHASENRAUSCHENSCHÄTZUNG UND -KOMPENSATION

ESTIMATION ET COMPENSATION DE BRUIT DE PHASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 US 201462018908 P**

(43) Date of publication of application:
**03.05.2017 Bulletin 2017/18**

(73) Proprietor: **Telefonaktiebolaget LM Ericsson (publ)**
**164 83 Stockholm (SE)**

(72) Inventors:
 • **NING, He**
  **S-191 34 Sollentuna (SE)**
 • **AXNÄS, Johan**
  **S-171 62 Solna (SE)**
 • **BALDEMAIR, Robert**
  **S-17069 Solna (SE)**

(74) Representative: **Brann AB**
**P.O. Box 3690**
**Drottninggatan 27**
**103 59 Stockholm (SE)**

(56) References cited:
  **US-A1- 2007 025 461     US-A1- 2013 259 174**

  • **SICONG LIU ET AL: "Investigation of pilot-aided phase noise compensation in CO-OFDM system", COMMUNICATIONS AND PHOTONICS CONFERENCE AND EXHIBITION (ACP), 2010 ASIA, IEEE, PISCATAWAY, NJ, USA, 8 December 2010 (2010-12-08), pages 601-602, XP031845205, ISBN: 978-1-4244-7111-9**
  • **ARMADA A G ET AL: "Phase noise and sub-carrier spacing effects on the performance of an OFDM communication system", IEEE COMMUNICATIONS LETTERS, IEEE SERVICE CENTER, PISCATAWAY, NJ, US, vol. 2, no. 1, 1 January 1998 (1998-01-01) , pages 11-13, XP011429669, ISSN: 1089-7798, DOI: 10.1109/4234.658613 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure is directed to wireless communication systems, and more particularly, methods, network nodes, user equipment nodes and systems that reduce phase noise in a wireless signal.

BACKGROUND

Users of mobile broadband communications systems demand increasingly higher data rates. For example, mobile broadband communications systems will be expected to deliver data rates in the range of multiple gigabits per second. One way of increasing data rates is to increase spectral efficiency relative to the existing radio access technologies, for example by applying even higher order modulation, using a larger number of MIMO streams, or both. However, implementing more complex multiplexing schemes may increase the cost of hardware and may also increase energy usage, both of which are undesirable for mobile devices.

Another way to increase data rates is to simply increase the bandwidth employed by the system. However, many frequency bands are already reserved by law for other types of communications, such as satellite communication, broadcasting, navigation, etc. To find wide frequency bands that are available for use in mobile communications, it may be necessary to consider using frequencies in the millimeter wave bands, i.e. higher than 30 GHz. However, at millimeter wave frequencies, the phase noise contributed by the radio hardware may become an issue, since the oscillator contribution to the phase noise increases quadratically with carrier frequency. To cope with the problem of phase noise, the IEEE 802.11ad standard operating at 60 GHz frequency region with a bandwidth of 2GHz uses a subcarrier spacing of above 5 MHz.

Orthogonal Frequency Division Multiplexing (OFDM) techniques, which can also include precoded OFDM, such as DFT-spread OFDM or SC-FDMA (Single Carrier Frequency Division Multiple Access), are simple and widely used modulation schemes used in many communications radio access technologies, such as LTE, wifi, DVB etc. OFDM and DFT-spread OFDM are sensitive to phase noise, especially in high frequency bands, which can cause saturation of the signal to noise ratio (SNR) of the received signal. This limits the data rate that it is possible to achieve. The authors of the paper "A.G. Armada and M. Calvo, Phase noise and sub-carrier spacing effects on the performance of an OFDM communication system, IEEE communication letters, vol. 2, No.1 Jan. 1998," provide an analysis of the issue and describe a way to reduce the low frequency part of the phase noise (so called common phase error, or CPE) caused in the reception part. However, reducing CPE may have a limited effect in high frequency systems, since the higher frequency part of phase noise gives a significant performance degradation with systems operating at higher SNR. The IEEE 802.1 lad Standard with subcarrier spacing of 5 MHz or above requires a very large overhead in the cyclic prefix and guard period due to the very short OFDM symbol in the time period (the OFDM symbol period is the inverse of the subcarrier spacing). For a system needing a larger cyclic prefix to cover a larger area or/and higher mobility than the systems envisioned by the IEEE 802.11ad standard, the overhead requirements would be even larger. SICONG LIU ET AL: "Investigation of pilot-aided phase noise compensation in CO-OFDM system", COMMUNICATIONS AND PHOTONICS CONFERENCE AND EXHIBITION (ACP), 2010 ASIA, IEEE, PISCATAWAY, NJ, USA, 8 December 2010 (2010-12-08) introduces a scheme called pilot-aided phase noise compensation, and verify a conventional Coherent Optical Orthogonal Frequency Division Multiplexing (CO-OFDM) transmission system's capacity to compensate phase noise by simulation. Further, US 2013/0259174 describes a method for phase noise mitigation for a coherent receiver in either an OFDM or single carrier based transmission system including applying a frequency offset and coarse phase noise compensation. US 2007/0025461 describes a phase noise compensation apparatus to be applied to the OFDM system, comprising an inter carrier interference (ICI) estimating unit, a common phase error (CPE) estimating unit, and a calculating unit.

SUMMARY

The invention is defined by the independent claims. Some embodiments provide methods of reducing phase noise in a received signal. Reducing phase noise can increase the signal to noise ratio of the received signal, which can increase the achievable data rate, especially in systems using OFDM and DFT-spread OFDM.

Some methods include identifying a pilot component in the received signal and determining an expected pilot component that would have been received in the absence of phase noise. Based on the received pilot component and the expected pilot component, an estimate is generated of the phase noise realization for different parts of an OFDM symbol in the received signal, and based on the estimate of the phase noise realization, the received signal is compensated for the phase noise.

Phase-noise compensation may be performed sample by sample in the time domain, and phase noise error may be estimated as a per-sample complex angle error. Compensation for phase noise may include de-rotating the time-domain signal.

The received signal may be received using multiple antenna ports, and the signals received over the multiple antenna ports may be processed separately.

The received signal may be received using multiple antenna ports, and the phase noise error may be averaged over different multiple antenna ports.

The pilot component may include a regular OFDM symbol and the data signal may include a DFT-spread OFDM symbol.

The pilot component may include a DFT-spread OFDM symbol and the data signal may include a regular OFDM symbol. In some embodiments, the pilot component and the data component have the same OFDM type.

A quantity used to calculate the phase-noise estimate may be smoothened in the time domain before the phase-noise estimate may be calculated. In some embodiments, the quantity used to calculate the phase-noise estimate may include a correlation of actual and expected received pilot signals.

The phase-noise estimate may be smoothened in the time domain. Further, the phase-noise estimate may be smoothened using a sliding-window averaging. Smoothening the phase-noise estimate using sliding-window averaging may include using sliding-window weights that depend on the value of the quantity being averaged.

Common Phase Error compensation may be performed before the sample-by-sample compensation. Compensation may be performed for phase noise in the transmitter and/or in the receiver. In particular, compensation may be performed both for phase noise originating from the transmitter and for phase noise originating from the receiver.

A base station (BS) of a Radio Access Network (RAN) according to some embodiments includes a transceiver configured to provide radio communications with a plurality of wireless terminals, a processor coupled to the transceiver and the network interface, and a memory coupled to the processor.

The memory includes computer readable program code embodied therein that, when executed by the processor, causes the processor to perform operations including identifying a pilot component in the received signal, determining an expected pilot component that would have been received in the absence of phase noise, based on the received pilot component and the expected pilot component, generating an estimate of the phase noise realization for different parts of an OFDM symbol in the received signal, and based on the estimate of the phase noise realization, compensating the received signal for the phase noise.

A user equipment (UE) according to some embodiments includes a transceiver configured to provide radio communications with a base station, a processor coupled to the transceiver and the network interface, and a memory coupled to the processor.

The memory includes computer readable program code embodied therein that, when executed by the processor, causes the processor to perform operations including identifying a pilot component in the received signal, determining an expected pilot component that would have been received in the absence of phase noise, based on the received pilot component and the expected pilot component, generating an estimate of the phase noise realization for different parts of an OFDM symbol in the received signal, and based on the estimate of the phase noise realization, compensating the received signal for the phase noise.

BRIEF DESCRIPTION OF THE DRAWINGS

The accompanying drawings are included to provide a further understanding of the disclosure and are incorporated in and constitute a part of this application. In the drawings:

Figure 1 illustrates a time and frequency resource map including phase-noise pilots.
Figure 2 is a block diagram illustrating a communications system in which phase noise reduction according to some embodiments may be implemented.
Figures 3A and 3B are flowcharts illustrating operations of systems/methods according to some embodiments.
Figure 4 is a block diagram of a receiver chain including a phase noise compensator in accordance with some embodiments.
Figure 5 is a graph illustrating simulated results of phase noise reduction in accordance with some embodiments.
Figure 6 is a block diagram illustrating a Radio Access Network (RAN) in which some embodiments of present inventive concepts may be employed.
Figure 7 is a flowchart illustrating operations of devices according to some embodiments of the inventive concepts.
Figures 8 and 9 are block diagrams illustrating elements of a base station BS of Figure 6.
Figure 10 and 11 are block diagrams illustrating elements of a user equipment UE of Figure 6.

DETAILED DESCRIPTION OF EMBODIMENTS

Embodiments of the present inventive concepts now will be described more fully hereinafter with reference to the accompanying drawings. The inventive concepts may, however, be embodied in many different forms and should not be construed as limited to the embodiments set forth herein. Rather, these embodiments are provided so that this disclosure will be thorough and complete, and will fully convey the scope of the inventive concepts to those skilled in the art. Like numbers refer to like elements throughout.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present inventive concepts. As used herein, the term "and/or" includes any and all combinations of one or more of the associated listed items.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments estimate phase noise in a received signal (including high frequency phase noise) and compensate for the phase noise before the received signal is processed by the receiver. Because the receiver processes signals having reduced high frequency phase noise, it may be possible to reduce the subcarrier spacing, thereby increasing the OFDM symbol period.

The disclosure of PCT Application No. PCT/EP2013/056754, filed 28 March 2013, entitled "A Phase Reference Symbol Format For OFDM Phase Synchronization" (the '754 PCT application), which is assigned to the assignee of the present application. The '754 PCT application describes a scheme in which a known signal (henceforth referred to as a "phase-noise pilot", or PNP) occupies a small portion of frequency and may be continuously transmitted in the time domain. The scheme described in the '754 PCT application captures the time variation of the phase noise.

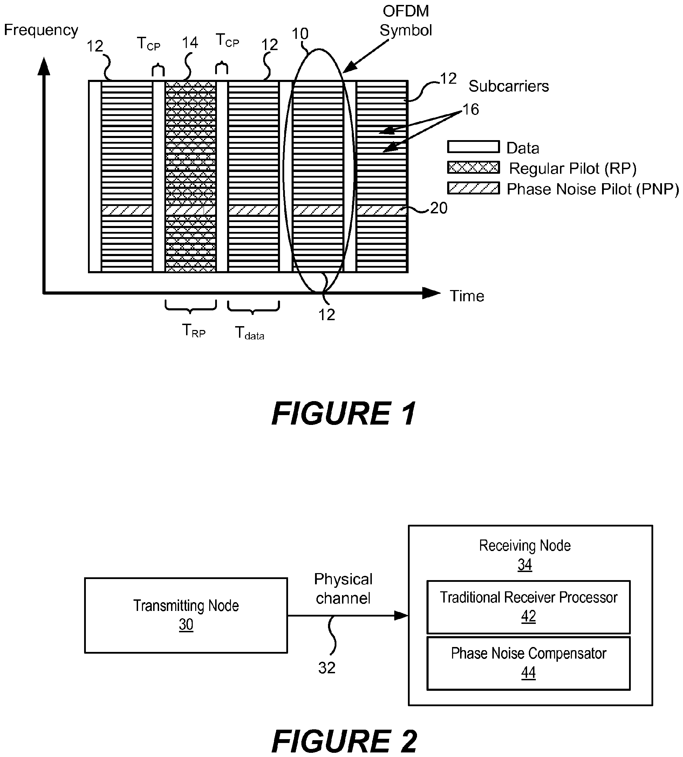

Figure 1 illustrates the use of phase-noise pilots in an OFDM communication system. As shown therein, an OFDM signal is comprised of a series of OFDM symbols 10 that include data symbols 12 interspersed with regular pilot symbols 14. Each of the OFDM symbols includes a plurality of subcarriers 16 that are separated in frequency by a predefined subcarrier spacing. There can, in the general case, also be OFDM symbols containing both data subcarriers and subcarriers with regular pilots (not shown in Figure 1). Although described primarily in the context of OFDM communications, embodiments of the inventive concepts can be applied to various different modulation techniques, such as OFDM based modulation including DFT-spread OFDM, Universal filtered multi-carrier (UFMC) etc., and other multi-carrier modulation, such as FBMC (filter band multicarrier).

The data symbols have a duration of $T_{data}$, while the regular pilot symbols have a duration of $T_{RP}$. The OFDM symbols are spaced apart in the time domain by the cyclic prefix $T_{CP}$. Phase noise pilots (PNP) 20 are inserted at a predefined frequency into one or more OFDM symbols 10, including both the data symbols 12 and the regular pilots 14. It will be appreciated, however, that the PNP 20 can be placed in other sub-carriers and/or may occupy different numbers of sub-carriers than shown in Figure 1. In addition, if an OFDM symbol already contains enough regular pilots, there might not be any need for additional phase-noise pilots to implement the methods described herein. The PNP is a known signal that can be used by the receiver to measure and quantify distortion in the received signal.

The pilot component and the data signal may include different types of signals. For example, in some embodiments, the pilot component may be a regular OFDM signal and the data signal may be a DFT-spread OFDM signal. In some embodiments, the pilot component may be a DFT-spread OFDM signal and the data signal may be a regular OFDM signal.

In other embodiments, the pilot component and the data component may have the same OFDM type.

Figure 2 illustrates a system that employs a phase noise compensator in accordance with some embodiments. As shown in Figure 2 a transmitting node 30 transmits a signal over a physical channel 32 to a receiving node 34. The physical channel may include a wireless channel, although embodiments described herein are not limited thereto. The receiving node includes a receiver processor 42 and a phase-noise compensator 44 that works together with the receiver processor to process the received signal.

According to some embodiments, the transmitting node and/or the receiving node may include a radio access network (RAN) base station node or a user equipment node, and the physical channel may be a wireless uplink or downlink physical channel.

According to some embodiments described herein, a receiver includes a phase noise compensator that estimates and compensates for phase noise, such as phase noise caused by the oscillators in the receiver and/or transmitter. The phase noise compensator can be implemented, for example, using a digital signal processor (DSP), such as the TMS320C5000™ Ultra-Low-Power DSP manufactured by Texas Instruments Incorporated, and/or any signal processing hardware and/or software. Phase noise that originates in both the transmitter side and the receiver side can be compensated according to some embodiments.

According to some embodiments, the time-domain received signal component associated with the PNP 20 is isolated and compared with what would have been the expected received signal had there been no phase noise. These embodiments perform compensation of the data component of the received signal on a sample by sample basis based on the results of that comparison. That is, phase noise compensation is performed with different amounts of compensation for different time samples (as opposed to just CPE compensation, which is the same amount for all time samples).

More precisely, for each time-domain sample in an OFDM symbol, the actual PNP signal component (isolated, e.g., by filtering in the frequency domain) is compared with the PNP signal component that would have been expected in the absence of any phase noise. The phase difference between the two signals is calculated and taken as an estimate of the (actual) phase-noise realization for the respective sample. The sample of the received signal is then compensated for phase noise by phase-shifting the sample in the opposite direction by the amount of estimated phase noise, before normal receiver processing, which may not otherwise include phase-noise compensation. In some embodiments, the phase-noise estimate may be smoothened before being used to adjust the received signal. For example, the phase-noise estimate may be filtered using a sliding window in the time domain.

Some embodiments may be explained with reference to a single input, single output (SISO) channel that is subject to flat fading and additive white Gaussian noise (AWGN). A SISO channel includes a single transmit antenna and a single receive antenna. However, it will be appreciated that embodiments described herein may be advantageously applied to other types of channels, including MIMO channels, and channels subject to other types of fading and/or noise.

In the context of a SISO channel, the received signal, after analog-to-digital conversion (ADC), may be expressed as:

$$y(i) = \exp(j\varphi(i)) \cdot h(i) \cdot x(i) + w(i) \qquad [1]$$

where $i$ is a time-sample index, $\varphi(i)$ is the (actual) phase noise realization at time instance $i$, $h(i)$ is the physical channel at time $i$, $x(i)$ is the transmitted signal, $w(i)$ is the thermal noise realization, and $j$ is the imaginary unit.

According to some embodiments, phase-noise compensation may be performed as follows. First the received time-domain signal $y(i)$ is converted to a frequency-domain signal $Y(k)$:

$$Y(k) = \mathrm{DFT}(y(i)) \qquad [2]$$

where DFT denotes the discrete Fourier transform of its argument function (implemented, e.g., as a fast Fourier transform). Then, the data part of the signal is removed by setting frequency domain samples other than the pilot samples to zero, as follows:

$$Y^{\mathrm{pilot}}(k) = \begin{cases} Y(k) & k \in P_{\mathrm{pilot}} \\ 0 & \text{otherwise} \end{cases} \qquad [3]$$

where $P_{pilot}$ is the set of all phase-noise pilot subcarriers. The notation "pilot" in Equation [3] typically refers only to PNP subcarriers, but may also include regular pilot symbols if present. To capture the phase noise sufficiently, the phase-noise pilot subcarriers may preferably span a bandwidth that is comparable to the phase noise bandwidth, or more. The signal component $Y^{\mathrm{pilot}}(k)$ is then converted back to the time domain as follows:

$$y^{\mathrm{pilot}}(i) = \mathrm{IDFT}\left(Y^{\mathrm{pilot}}(k)\right) \qquad [4]$$

where IDFT denotes the inverse discrete Fourier transform. The signal that would have been expected if there were no phase noise is calculated as:

$$z^{\text{pilot}}(i) = \hat{h}(i) \cdot x^{\text{pilot}}(i) \qquad\qquad [5]$$

where $\hat{h}(i)$ is the estimated channel (possibly including CPE contribution to the effective channel), for which good enough accuracy is assumed, and $x^{\text{pilot}}(i)$ is the *a priori* known pilot component of the transmitted signal. The known pilot component may be obtained, for example, by applying an IDFT to only the pilot subcarriers of the frequency-domain representation of the transmitted signal. Alternatively, the known pilot component $x^{\text{pilot}}(i)$ may be stored in a lookup table in the receiver.

Then, the phase angle difference between $y^{\text{pilot}}(i)$ and $z^{\text{pilot}}(i)$ can be obtained as a per-sample complex angle error as follows:

$$\alpha(i) = \arg\left(\frac{y^{\text{pilot}}(i)}{z^{\text{pilot}}(i)}\right) \qquad\qquad [6]$$

where arg() denotes the complex angle (the imaginary component of the logarithm). After an optional smoothening step, e.g. using a sliding window over $\alpha(i)$, a smoothened ratio $\overline{\alpha(i)}$ is obtained. If no smoothening is used, $\overline{\alpha(i)}$ may be set equal to $\alpha(i)$. Ideally, $\overline{\alpha(i)}$ may be a good estimate of the actual phase noise realization. Finally, the phase noise in the received signal $y(i)$ is compensated for as

$$y^{\text{compensated}}(i) = \exp(-j\overline{\alpha}(i)) \cdot y(i) \qquad\qquad [7]$$

Normal receive processing (equalization, demodulation, decoding, etc) is then performed on $y^{\text{compensated}}(i)$, in the same way as would be performed directly on $y(i)$ in a receiver without phase-noise compensation.

Alternative Embodiments

In some embodiments, a power boosting of pilots may be taken into account in the phase noise compensation process. Since detection of pilots is important for good reception and at least indirectly affects all subsequent processing in the receiver, it is not uncommon for radio communication systems to have some means for the receiver to transmit (regular) pilots with a higher power than other resources (such as data or control signaling), thereby facilitating accurate detection. In such systems, an optimal receiver algorithm may be aware of and take into consideration the power difference between pilots and other resources.

In other embodiments, the phase-angle difference may be formed as follows:

$$\alpha(i) = \arg\left(y^{\text{pilot}}(i)\right) - \arg\left(z^{\text{pilot}}(i)\right) \qquad\qquad [8]$$

in which case, however, care needs to be taken to use the appropriate branch of the arg function.

In still other embodiments, if the received signal is noisy, it may be useful to remove outliers by placing ceiling ($\alpha_{\max}$) and floor ($\alpha_{\min}$) limits on the raw phase angle differences as follows:

$$\alpha(i) = \begin{cases} \alpha_{\min} & \alpha_{\text{raw}} < \alpha_{\min} \\ \alpha_{\text{raw}} & \alpha_{\min} < \alpha_{\text{raw}} < \alpha_{\max} \\ \alpha_{\max} & \alpha_{\text{raw}} > \alpha_{\max} \end{cases} \qquad\qquad [9]$$

where

$$\alpha_{\text{raw}}(i) = \arg\left(\frac{y^{\text{pilot}}(i)}{z^{\text{pilot}}(i)}\right) \qquad\qquad [10]$$

In further embodiments, the received pilot signal $y^{\text{pilot}}(i)$ may be correlated with the expected pilot signal $z^{\text{pilot}}(i)$,

and the phase difference may be taken as the argument of the correlation, as follows:

$$\arg\left(y^{\text{pilot}}(i)\left(z^{\text{pilot}}(i)\right)^*\right) \qquad [11]$$

where * denotes the complex conjugate. An advantage of this method is that more unreliable (weaker) signal components are reduced in weighting. More generally, a weighting function $f_{\text{weight}}(i,\alpha_{\text{raw}}(i))$ may be used in the averaging, e.g.,

$$\frac{\sum_i f_{\text{weight}}(i,\alpha_{\text{raw}}(i))\cdot\alpha_{\text{raw}}(i)}{\sum_i f_{\text{weight}}(i,\alpha_{\text{raw}}(i))} \qquad [12]$$

The weighting function may be chosen so as to de-emphasize samples with low reliability, e.g. weak samples. Weighting can also be obtained before applying the arg() function, i.e., e.g.,

$$\arg\frac{\sum_i f_{\text{weight}}(i,r_{\text{raw}}(i))\cdot r_{\text{raw}}(i)}{\sum_i f_{\text{weight}}(i,r_{\text{raw}}(i))} \qquad [13]$$

where, e.g.,

$$r_{\text{raw}}(i) = \frac{y^{\text{pilot}}(i)}{z^{\text{pilot}}(i)} \qquad [14]$$

or

$$r_{\text{raw}}(i) = y^{\text{pilot}}(i)\left(z^{\text{pilot}}(i)\right)^* \qquad [15]$$

In the latter case, multiplication by $z^{\text{pilot}}(i)$ may already achieve the weighting; in this case, a constant weighting function $f_{\text{weight}}(i,r_{\text{raw}}(i))=$ const could be used.

MIMO over Flat Fading Channel

In the case of multiple receive antennas, the processing described above to obtain $y^{\text{compensated}}(i)$ may simply be performed separately for each receive antenna. If it is known that the phase noise is highly correlated between all (or a subset) of the receive antennas, an average may be taken across antennas of the estimated phase error $\alpha(i)$ or $\overline{\alpha(i)}$, for example:

$$\overline{\alpha}_n^{\text{antenna-average}}(i) = \frac{1}{N}\sum_{n=1}^{N}\overline{\alpha}_n(i) \qquad [16]$$

and then the average phase noise estimate $\overline{\alpha}_n^{\text{antenna-average}}(i)$ may be used instead of $\overline{\alpha(i)}$ (or $\alpha(i)$) in subsequent processing.

In the case of multiple transmit antennas, the case of highly correlated phase noise on different transmit antennas is most easily handled. In that case, processing similar to the case of single transmit antenna may be performed. If the phase noise on different antennas is not fully correlated, it may be preferable to make phase noise pilots transmitted over the different transmit antennas orthogonal to each other, either via orthogonal code/time/frequency resources.

Non-Flat Fading Channel

If the channel is not flat fading, i.e. if there is substantial variation in the channel as a function of frequency across the bandwidth, there are in general three cases to consider: (i) the receiver-side phase noise dominates and (ii) the transmitter phase noise dominates, (iii) the receiver-side and the transmitter-side phase noise is of comparable magnitude. In case (i), the processing techniques described above may be applied directly. In case (ii), it may be desirable to perform equalization of the received signal, e.g. as:

$$\mathbf{Y}^{\text{equalized}}(k) = \mathbf{H}^{\text{H}}(k)\big(\mathbf{H}(k)\mathbf{H}^{\text{H}}(k) + \mathbf{Q}(k)\big)^{-1}\mathbf{Y}(k) \qquad [17]$$

where $\mathbf{Y}(k)$ is a vector representing the multi-antenna signal at subcarrier $k$, $\mathbf{H}(k)$ is the frequency-domain representation of the physical channel (possibly including also transmitter and/or receiver precoder and/or a CPE contribution), and $\mathbf{Q}(k)$ is the noise covariance matrix.

In case (iii), if time dispersion is not very large, either the method for case (i) or the method for case (ii) may be used. If time dispersion is large, the problem becomes more challenging, but may still be effective.

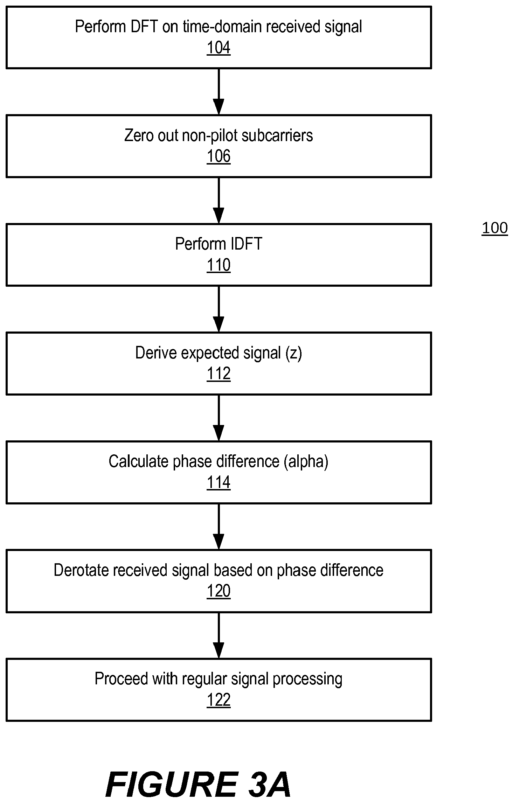

Operations 100 according to some embodiments are illustrated in Figure 3A. As shown in Figure 3A, a discrete Fourier transform is performed on the time-domain received signals $y(i)$ to convert the time domain signal into a frequency domain signal $Y(k)$ (block 104). Non-pilot subcarriers in the frequency domain signal $Y(k)$ are then set to zero (block 106).

An IDFT operation is then performed on the frequency domain pilot signal $Y^{\text{pilot}}(k)$ to obtain a time domain representation $y^{\text{pilot}}(i)$ of the pilot signal (block 110).

An expected signal $z^{\text{pilot}}(i)$ is then obtained, for example, by applying the channel estimates $\hat{h}(i)$ to the *a priori* known pilot signal $x^{\text{pilot}}(i)$ (block 112). A phase difference $\alpha(i)$ between the received pilot signal $y^{\text{pilot}}(i)$ and the expected pilot *signal* $z^{\text{pilot}}(i)$ is then determined (block 114).

The received signal estimates $Y(k)$ are then de-rotated by, for example, shifting the phase of the received signal estimates by an amount opposite to the phase difference estimates $\overline{\alpha(i)}$ to obtain phase-adjusted samples $y^{\text{compensated}}(i)$ (block 120). The phase-adjusted samples $y^{\text{compensated}}(i)$ are then processed according to normal receiver operations (block 122).

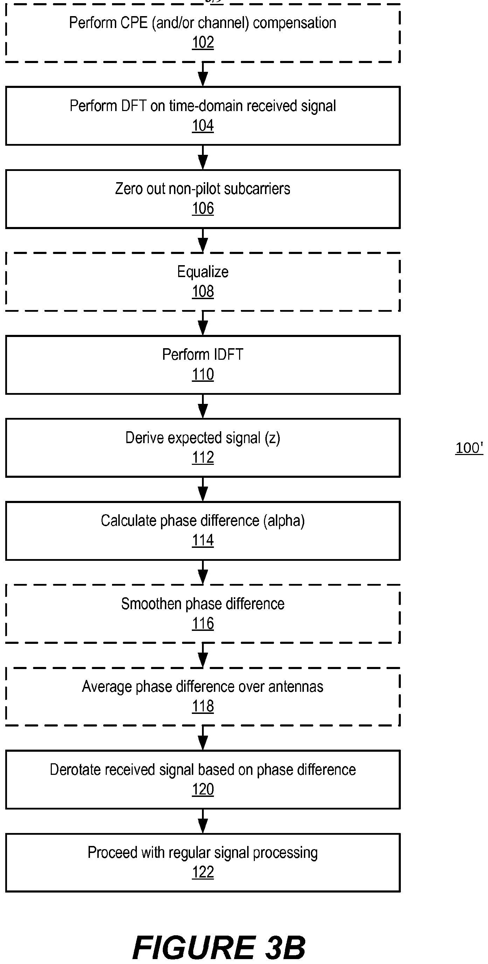

Operations 100' according to further embodiments are illustrated in Figure 3A. In Figure 3B, the operations shown in solid lines are similar to those described above with respect to Figure 3A and a description thereof will not be repeated for brevity. d Optional operations are illustrated in broken lines. However even some operations shown solid lines may be omitted depending on the particular embodiment and/or radio access technology being employed.

As shown in Figure 3B, the operations 100 may include performing common phase error (CPE) reduction on received signal samples (block 102) before performing a DFT operation on the received signal samples in block 104.

Furthermore, the signal may optionally be equalized (before or after zeroing out the non-pilot subcarriers) to compensate for channel distortion (block 108) before performing an IDFT operation on the samples in block 110.

In some embodiments, the phase difference obtained in block 114 may be smoothened, for example, using a moving average filter, a Kalman filter, a weighted average filter, etc., to obtain average phase difference estimates (block 116). Furthermore, in some embodiments, the phase difference may be averaged over a plurality of receive antennas (block 118) before using the phase difference to derotate the received signal in block 120.

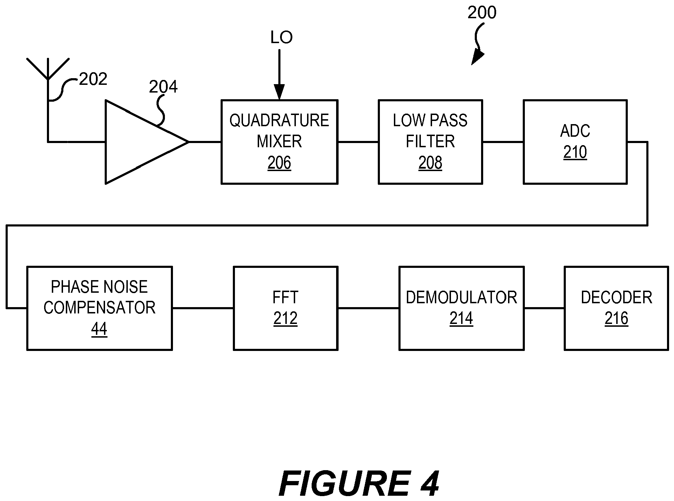

Figure 4 illustrates a simplified OFDM receiver architecture 200 including a phase noise compensator according to some embodiments. The receiver 200 includes an antenna 202 that receives an OFDM signal. The signal is amplified in a low noise amplifier 204 and then mixed in a quadrature mixer 206 that is fed by a local oscillator LO. The resulting complex signal is filtered with a low pass filter 208 and then sampled and converted to digital by an analog to digital converter 210.

The digital samples are then processed by a phase noise compensator 44 using the techniques described above to obtain phase-adjusted samples.

The phase-adjusted samples are then processed by a fast Fourier transform processor (FFT) 212, a demodulator 214 and a decoder 216 to recover the original transmitted sequence. It will be appreciated that the phase noise compensator block 44 may internally also include an FFT, demodulator, decoder etc., for example, if data-assisted iterative phase noise compensation is used. Moreover, either hard decision feedback or soft decision feedback may be used.

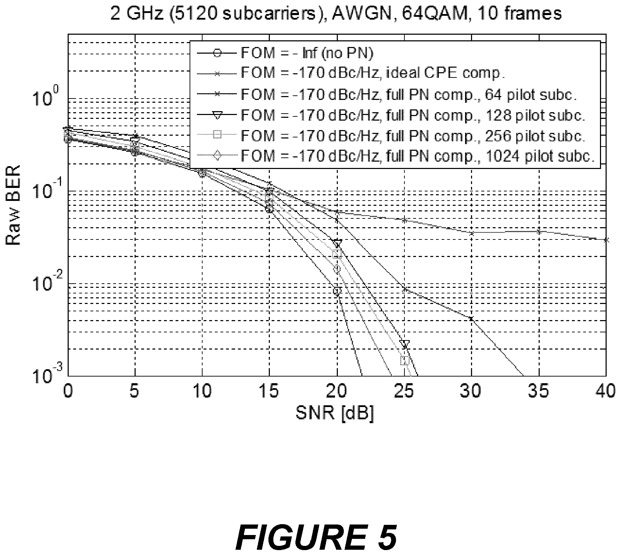

Simulation results obtained using systems/methods described herein are illustrated in Figure 5 for an AWGN channel having a 2 GHz bandwidth and employing 5120 OFDM subcarriers. The results (full PN comp.) using various numbers of pilot subcarriers are compared in Figure 5 with performance with a more simple CPE based phase noise compensation approach (ideal CPE comp.). As a reference, performance in the absence of any phase noise disturbance is also shown (in which case a traditional receiver without phase-noise compensation is used). The results shown in Figure 5 were obtained using smoothening of phase noise estimate over 100 samples using a sliding window.

As can be seen in Figure 5, there is a pronounced error floor if only CPE compensation is used. However, by employing the techniques described herein (referred to in Figure 4 as "full PN comp."), as little as 128 PNP subcarriers (about 2.5% pilot overhead) is enough to essentially remove the error floor. FOM in the plot of Figure 4 stands for Figure of Merit and is used to describe the local oscillator.

As can be seen in Figure 5, a simple non-adaptive algorithm for phase noise compensation may degrade performance at low SNR values. Thus, in some embodiments, the phase-noise compensation algorithm may be adaptively modified or completely disabled if it is detected that the signal-to-noise ratio (SNR) is below a certain level. For example, in some embodiments, the phase-noise compensation algorithm may be adaptively modified or disabled if the SNR is 5 dB or lower, and in some embodiments 10 dB or lower.

In further embodiments, the transmitter may avoid transmitting PN pilots if the receiver reports a low SNR or otherwise indicates that PN pilots are not needed. That is, if the receiver is not benefitting from phase noise compensation, then the subcarriers that would otherwise be used for PNP pilots may be used to carry data instead.

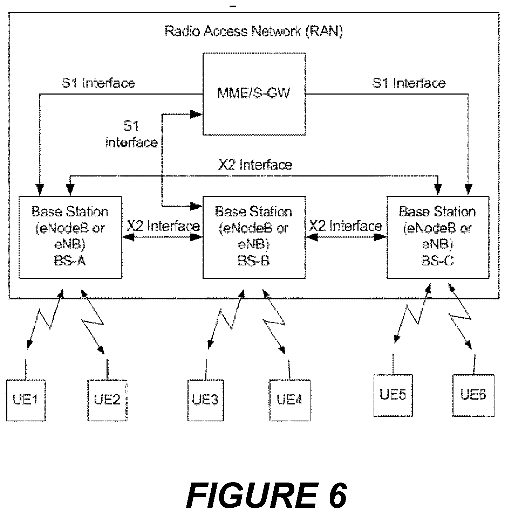

Figure 6 is a block diagram illustrating a Radio Access Network (RAN) in which some embodiments of present inventive concepts may be employed. As shown, communications between a plurality of base stations BS-A, BS-B, and BS-C may be provided using respective X2 Interfaces, and communications between base stations and one or more core nodes MME/S-GW may be provided using respective S1 interfaces. Each base station BS may communicate over a radio interface (including uplinks and downlinks) with respective wireless terminals UEs in a respective cell or cells supported by the base station. By way of example, base station BS-A is shown in communication with wireless terminals UE-1 and UE-2, base station BS-B is shown in communication with wireless terminals UE-3 and UE-4, and base station BS-C is shown in communication with wireless terminals UE-5 and UE-6. In embodiments supporting distributed schemes/architectures, each of base stations BS-A, BS-B, and BS-C may be respective peer nodes with respect to distributed scheduling disclosed herein. In embodiments supporting centralized schemes/architectures, one of the base stations (e.g., base station BS-B may serve as a central coordinator node with respect to centralized scheduling disclosed herein.

It will be appreciated, however, that embodiments of the inventive concepts are not limited to the arrangement shown in Figure 6.

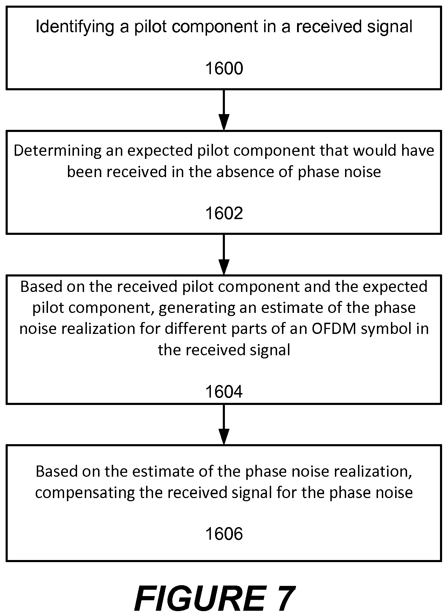

Figure 7 illustrates operations that may be performed by a network node, such as a base station or a user equipment, in accordance with some embodiments. As shown therein, the operations include identifying a pilot component in the received signal (block 1600), and determining an expected pilot component that would have been received in the absence of phase noise (block 1602).

An estimate of the phase noise realization for different parts of an OFDM symbol in the received signal is generated based on the received pilot component and the expected pilot component (block 1604), and the received signal is compensated for phase noise based on the estimate of the phase noise realization (block 1606).

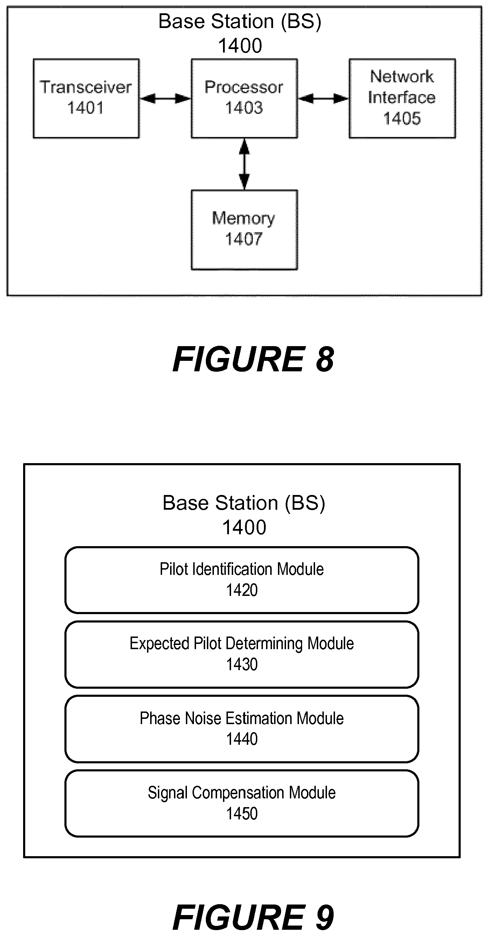

Figure 8 is a block diagram illustrating elements of a base station (BS) 1400 of Figure 6. As shown, a base station 1400 may include a transceiver 1401 configured to provide radio communications with a plurality of wireless terminals, a network interface 1405 configured to provide communications with other base stations of the RAN, and a processor 1403 coupled to the transceiver and the network interface, and a memory (1407) coupled to the processor. The memory 1407 may include computer readable program code that when executed by the processor 1403 causes the processor to perform operations according to embodiments disclosed herein. According to other embodiments, processor 1403 may be defined to include memory so that a memory is not separately provided.

Figure 9 is a block diagram of a base station 1400 illustrating various functional modules of the base station 1400. As shown therein, the base station 1400 includes a pilot identification module 1420, an expected pilot determining module 1430, a phase noise estimation module 1440 and a signal compensation module 1450. The pilot identification module 1420 identifies a pilot component in a received signal. The expected pilot determining module 1430 determines an expected pilot component that would have been received in the absence of phase noise. The phase noise estimation module 1440 generates an estimate of the phase noise realization for different parts of an OFDM symbol in the received signal based on the received pilot component and the expected pilot component, and the signal compensation module 1450 compensates the received signal for the phase noise based on the estimate of the phase noise realization.

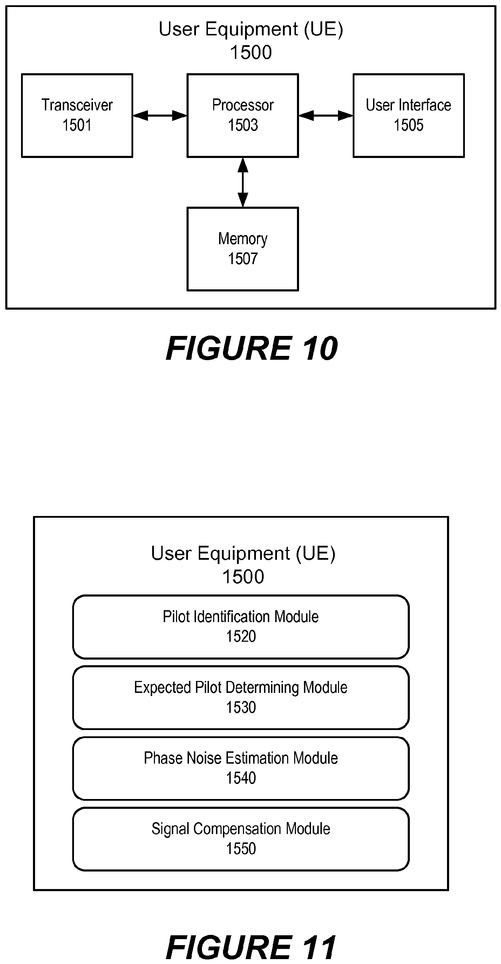

Figure 10 is a block diagram illustrating elements of a user equipment (UE) 1500 of Figure 6. As shown, a user equipment 1500 may include a transceiver 1501 configured to provide radio communications with a base station, a user interface 1505 configured to enable a user to interact with the UE 1500, a processor 1503 coupled to the transceiver and the user interface, and a memory (1507) coupled to the processor. The memory 1507 may include computer readable program code that when executed by the processor 1503 causes the processor to perform operations according to embodiments disclosed herein. According to other embodiments, processor 1503 may be defined to include memory so that a memory is not separately provided.

Figure 11 is a block diagram of a UE 1500 illustrating various functional modules of the UE 1500. As shown therein, the UE 1500 includes a pilot identification module 1520, an expected pilot determining module 1530, a phase noise estimation module 1540 and a signal compensation module 1550. The pilot identification module 1520 identifies a pilot component in a received signal. The expected pilot determining module 1530 determines an expected pilot component that would have been received in the absence of phase noise. The phase noise estimation module 1540 generates an estimate of the phase noise realization for different parts of an OFDM symbol in the received signal based on the received pilot component and the expected pilot component, and the signal compensation module 1550 compensates the received signal for the phase noise based on the estimate of the phase noise realization.

ABBREVIATIONS

Explain all abbreviations and acronyms used in the document.

Abbreviation Explanation

| ADC | Analog-to-digital converter |
|---|---|
| PNP | Phase-noise pilots |
| CPE | Common phase error |
| FOM | Figure of merit |
| QAM | Quadrature amplitude modulation |
| SNR | Signal-to-noise ratio |
| BER | Bit-error rate |
| PN | Phase noise |
| DFT | Discrete Fourier transform |
| IDFT | Inverse discrete Fourier transform |
| arg | Argument (angle of complex number) |
| MIMO | Multiple-input multiple-output |
| SISO | Single-input single-output |
| AWGN | Additive white Gaussian noise |
| OFDM | Orthogonal Frequency Division Multiplexing |
| CPE | Common Phase Error |
| LTE | Long Term Evolution |
| DVB | Digital Video Broadcasting |
| FOM | Figure of Merit |
| DSP | Digital Signal Processor |

As will be appreciated by one of skill in the art, the present inventive concepts may be embodied as a method, data processing system, and/or computer program product. Furthermore, the present inventive concepts may take the form of a computer program product on a tangible computer usable storage medium having computer program code embodied in the medium that can be executed by a computer. Any suitable tangible computer readable medium may be utilized including hard disks, CD ROMs, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed typical embodiments and, although specific terms are employed, they are used in a generic and descriptive sense only and not for purposes of limitation, the scope of the inventive concepts being set forth in the following claims.

**Claims**

1. A method of reducing phase noise in a received signal, the method comprising:

    identifying (1600) a received pilot component within an orthogonal frequency division multiplexing, OFDM, symbol in the received signal,
    determining (1602) an expected pilot component that would have been received in the absence of the phase noise, wherein the expected pilot component is determined based on an estimated channel and an *a priori* known pilot component of a transmitted signal, and wherein the *a priori* known pilot component is obtained by applying an inverse discrete Fourier transform, IDFT, to only pilot subcarriers of frequency domain representation of the transmitted signal,
    based on the received pilot component and the expected pilot component, generating (1604) an estimate of a phase noise realization for different parts of the OFDM symbol in the received signal on a sample-by-sample basis,
    based on the estimate of the phase noise realization, compensating (1606) the received signal for the phase noise on the sample-by-sample basis within the OFDM symbol, and
    adaptively modifying or disabling the compensation of the received signal based on a detection of a signal-to-noise ratio level being below a threshold level.

2. The method of Claim 1, wherein the compensation (1606) for the phase noise on the sample-by-sample basis is performed in time domain.

3. The method of any preceding Claim, wherein the phase noise realization is estimated as a per-sample complex angle error.

4. The method of any preceding Claim, wherein the compensation for the phase noise comprises de-rotating a time-domain signal.

5. The method of Claim 1, further comprising processing the phase-noise-compensated signal using one or more conventional receiver processing techniques comprising at least one of demodulation and decoding.

6. The method of any preceding Claim, wherein a Common Phase Error compensation is performed before the compensation for the phase noise on the sample-by-sample basis.

7. The method of any preceding Claim, wherein the compensation for the phase noise is performed, in a transmitter.

8. The method of any of Claims 1-6, wherein the compensation for the phase noise is performed, in a receiver.

9. The method of any preceding Claim, wherein the compensation for the phase noise is performed for phase noise originating from the transmitter and for phase noise originating from the receiver.

10. A base station, BS, of a Radio Access Network, RAN, the base station comprising:

a transceiver (1401) configured to provide radio communications with a plurality of wireless terminals;

a processor (1403) coupled to the transceiver (140) and a network interface; and

a memory (1407) coupled to the processor (1403), the memory (1407) comprising computer readable program code embodied therein, which when executed by the processor (1403), causes the processor (1403) to perform operations comprising:

> identifying a received pilot component within an orthogonal frequency division multiplexing, OFDM, symbol in a received signal,
> determining an expected pilot component that would have been received in the absence of phase noise wherein the expected pilot component is determined based on an estimated channel and an *a priori* known pilot component of a transmitted signal, and wherein the *a priori* known pilot component is obtained by applying an inverse discrete Fourier transform, IDFT, to only pilot subcarriers of frequency domain representation of the transmitted signal,
> based on the received pilot component and the expected pilot component, generating an estimate of a phase noise realization for different parts of the OFDM symbol in the received signal on a sample-by-sample basis,
> based on the estimate of the phase noise realization, compensating the received signal for the phase noise on the sample-by-sample basis within the OFDM symbol, and
> adaptively modifying or disabling the compensation of the received signal based on a detection of a signal-to-noise ratio level being below a threshold level.

11. A user equipment, UE, comprising:

> a transceiver (1501) configured to provide radio communications with a plurality of wireless terminals;
> a processor (1503) coupled to the transceiver (1501); and
> a memory (1507) coupled to the processor (1503), the memory (1507) comprising computer readable program code embodied therein, which when executed by the processor (1503), causes the processor (1503) to perform operations comprising:

>> identifying a received pilot component within an orthogonal frequency division multiplexing, OFDM, symbol in a received signal,
>> determining an expected pilot component that would have been received in the absence of phase noise wherein the expected pilot component is determined based on an estimated channel and an *a priori* known pilot component of a transmitted signal, and wherein the *a priori* known pilot component is obtained by applying an inverse discrete Fourier transform, IDFT, to only pilot subcarriers of frequency domain representation of the transmitted signal,
>> based on the received pilot component and the expected pilot component, generating an estimate of a phase noise realization for different parts of the OFDM symbol in the received signal on a sample-by-sample basis,
>> based on the estimate of the phase noise realization, compensating the received signal for the phase noise on the sample-by-sample basis within the OFDM symbol, and
>> adaptively modifying or disabling the compensation of the received signal based on a detection of a signal-to-noise ratio level being below a threshold level.

**Patentansprüche**

1. Verfahren zum Reduzieren von Phasenrauschen in einem empfangenen Signal, wobei das Verfahren Folgendes umfasst:

> Identifizieren (1600) einer empfangenen Pilotkomponente innerhalb eines Orthogonal-Frequenzmultiplex-(OFDM-)Symbols in dem empfangenen Signal,
> Bestimmen (1602) einer erwarteten Pilotkomponente, die in Abwesenheit des Phasenrauschens empfangen worden wäre, wobei die erwartete Pilotkomponente basierend auf einem geschätzten Kanal und einer vorab bekannten Pilotkomponente eines übertragenen Signals bestimmt wird, und wobei die vorab bekannte Pilotkomponente erhalten wird, indem eine inverse diskrete Fourier-Transformation, IDFT, nur auf Pilotteilträger von Frequenzdomänendarstellung des übertragenen Signals angewandt wird,
> basierend auf der empfangenen Pilotkomponente und der erwarteten Pilotkomponente, Erzeugen (1604) einer Schätzung einer Phasenrauschenumsetzung für unterschiedliche Teile des OFDM-Symbols in dem empfangenen Signal auf einer Probe-um-Probe-Basis,

basierend auf der Schätzung der Phasenrauschenumsetzung, Kompensieren (1606) des empfangenen Signals für das Phasenrauschen auf der Probe-um-Probe-Basis innerhalb des OFDM-Symbols, und

adaptives Modifizieren oder Deaktivieren der Kompensation des empfangenen Signals basierend auf einer Erfassung eines Signal-Rausch-Verhältnis-Niveaus, das unter einem Schwellenniveau liegt.

2. Verfahren nach Anspruch 1, wobei die Kompensation (1606) für das Phasenrauschen auf der Probe-um-Probe-Basis in Zeitdomäne durchgeführt wird.

3. Verfahren nach einem vorhergehenden Anspruch, wobei die Phasenrauschenumsetzung als Komplexwinkelfehler pro Probe geschätzt wird.

4. Verfahren nach einem vorhergehenden Anspruch, wobei die Kompensation für das Phasenrauschen die Entrotation eines Zeitdomänensignals umfasst.

5. Verfahren nach Anspruch 1, ferner umfassend das Verarbeiten des phasenrauschenkompensierten Signals unter Anwendung von einer oder mehreren konventionellen Empfängerverarbeitungstechniken, die zumindest eines von Demodulation und Decodieren umfassen.

6. Verfahren nach einem vorhergehenden Anspruch, wobei vor der Kompensation für das Phasenrauschen auf der Probe-um-Probe-Basis eine Kompensation eines gemeinsamen Phasenfehlers durchgeführt wird.

7. Verfahren nach einem vorhergehenden Anspruch, wobei die Kompensation für das Phasenrauschen in einem Sender durchgeführt wird.

8. Verfahren nach einem der Ansprüche 1-6, wobei die Kompensation für das Phasenrauschen in einem Empfänger durchgeführt wird.

9. Verfahren nach einem vorhergehenden Anspruch, wobei die Kompensation für das Phasenrauschen für Phasenrauschen, das von dem Sender ausgeht, und für Phasenrauschen, das von dem Empfänger ausgeht, durchgeführt wird.

10. Basisstation, BS, eines Funkzugangsnetzwerks, RAN, wobei die Basisstation Folgendes umfasst:

einen Sendeempfänger (1401), der konfiguriert ist, um Funkkommunikation mit einer Vielzahl von drahtlosen Endgeräten bereitzustellen;

einen Prozessor (1403), der an den Sendeempfänger (140) und eine Netzwerkschnittstelle gekoppelt ist; und

einen Speicher (1407), der an den Prozessor (1403) gekoppelt ist, wobei der Speicher (1407) darin integrierten computerlesbaren Programmcode umfasst, der, wenn er durch den Prozessor (1403) ausgeführt wird, den Prozessor (1403) dazu veranlasst, Handlungen durchzuführen, umfassend:

Identifizieren einer empfangenen Pilotkomponente innerhalb eines Orthogonal-Frequenzmultiplex-(OFDM-)Symbols in einem empfangenen Signal,

Bestimmen einer erwarteten Pilotkomponente, die in Abwesenheit von Phasenrauschens empfangen worden wäre, wobei die erwartete Pilotkomponente basierend auf einem geschätzten Kanal und einer vorab bekannten Pilotkomponente eines übertragenen Signals bestimmt wird, und wobei die vorab bekannte Pilotkomponente erhalten wird, indem eine inverse diskrete Fourier-Transformation, IDFT, nur auf Pilotteilträger von Frequenzdomänendarstellung des übertragenen Signals angewandt wird,

basierend auf der empfangenen Pilotkomponente und der erwarteten Pilotkomponente, Erzeugen einer Schätzung einer Phasenrauschenumsetzung für unterschiedliche Teile des OFDM-Symbols in dem empfangenen Signal auf einer Probe-um-Probe-Basis,

basierend auf der Schätzung der Phasenrauschenumsetzung, Kompensieren des empfangenen Signals für das Phasenrauschen auf der Probe-um-Probe-Basis innerhalb des OFDM-Symbols, und adaptives Modifizieren oder Deaktivieren der Kompensation des empfangenen Signals basierend auf einer Erfassung eines Signal-Rausch-Verhältnis-Niveaus, das unter einem Schwellenniveau liegt.

11. Benutzergerät, UE, umfassend:

einen Sendeempfänger (1501), der konfiguriert ist, um Funkkommunikation mit einer Vielzahl von drahtlosen Endgeräten bereitzustellen;

einen Prozessor (1503), der an den Sendeempfänger (1501) gekoppelt ist; und

einen Speicher (1507), der an den Prozessor (1503) gekoppelt ist, wobei der Speicher (1507) darin integrierten computerlesbaren Programmcode umfasst, der, wenn er durch den Prozessor (1503) ausgeführt wird, den Prozessor (1503) dazu veranlasst, Handlungen durchzuführen, umfassend:

Identifizieren einer empfangenen Pilotkomponente innerhalb eines Orthogonal-Frequenzmultiplex-(OFDM-)Symbols in einem empfangenen Signal,

Bestimmen einer erwarteten Pilotkomponente, die in Abwesenheit von Phasenrauschens empfangen worden wäre, wobei die erwartete Pilotkomponente basierend auf einem geschätzten Kanal und einer vorab bekannten Pilotkomponente eines übertragenen Signals bestimmt wird, und wobei die vorab bekannte Pilotkomponente erhalten wird, indem eine inverse diskrete Fourier-Transformation, IDFT, nur auf Pilotteilträger von Frequenzdomänendarstellung des übertragenen Signals angewandt wird,

basierend auf der empfangenen Pilotkomponente und der erwarteten Pilotkomponente, Erzeugen einer Schätzung einer Phasenrauschenumsetzung für unterschiedliche Teile des OFDM-Symbols in dem empfangenen Signal auf einer Probe-um-Probe-Basis,

basierend auf der Schätzung der Phasenrauschenumsetzung, Kompensieren des empfangenen Signals für das Phasenrauschen auf der Probe-um-Probe-Basis innerhalb des OFDM-Symbols, und adaptives Modifizieren oder Deaktivieren der Kompensation des empfangenen Signals basierend auf einer Erfassung eines Signal-Rausch-Verhältnis-Niveaus, das unter einem Schwellenniveau liegt.

## Revendications

1. Procédé de réduction de bruit de phase dans un signal reçu, le procédé comprenant :

l'identification (1600) d'une composante pilote reçue à l'intérieur d'un symbole de multiplexage par répartition orthogonale de la fréquence, OFDM, dans le signal reçu,

la détermination (1602) d'une composante pilote attendue qui aurait été reçue en l'absence du bruit de phase, dans lequel la composante pilote attendue est déterminée sur la base d'un canal estimé et d'une composante pilote connue *a priori* d'un signal émis, et dans lequel la composante pilote connue *a priori* est obtenue par l'application d'une transformée de Fourier discrète inverse, IDFT, sur uniquement des sous-porteuses pilotes de représentation dans le domaine fréquentiel du signal émis,

sur la base de la composante pilote reçue et de la composante pilote attendue, la génération (1604) d'une estimation d'une réalisation de bruit de phase pour différentes parties du symbole OFDM dans le signal reçu, échantillon par échantillon, sur la base de l'estimation de la réalisation du bruit de phase, la compensation (1606) du signal reçu pour le bruit de phase échantillon par échantillon à l'intérieur du symbole OFDM, et

la modification de manière adaptative ou la désactivation de la compensation du signal reçu sur la base d'une détection d'un niveau de rapport signal sur bruit qui est inférieur à un niveau de seuil.

2. Procédé selon la revendication 1, dans lequel la compensation (1606) du bruit de phase échantillon par échantillon est réalisée dans le domaine temporel.

3. Procédé selon l'une quelconque des revendications précédentes, dans lequel la réalisation du bruit de phase est estimée en tant qu'erreur d'angle complexe par échantillon.

4. Procédé selon l'une quelconque des revendications précédentes, dans lequel la compensation du bruit de phase comprend la dérotation d'un signal dans le domaine temporel.

5. Procédé selon la revendication 1, comprenant en outre le traitement du signal compensé en bruit de phase à l'aide d'une ou de plusieurs techniques de traitement de récepteur classiques comprenant au moins une technique parmi la démodulation et le décodage.

6. Procédé selon une quelconque revendication précédente, dans lequel une compensation d'erreur de phase commune est réalisée avant la compensation du bruit de phase échantillon par échantillon.

7. Procédé selon une quelconque revendication précédente, dans lequel la compensation du bruit de phase est réalisée dans un émetteur.

8. Procédé selon l'une quelconque des revendications 1 à 6, dans lequel la compensation du bruit de phase est réalisée dans un récepteur.

9. Procédé selon une quelconque revendication précédente, dans lequel la compensation du bruit de phase est réalisée pour un bruit de phase originaire de l'émetteur et pour un bruit de phase originaire du récepteur.

10. Station de base, BS, d'un réseau d'accès radio, RAN, la station de base comprenant :

un émetteur-récepteur (1401) configuré pour fournir des communications radio avec une pluralité de terminaux sans fil ;
un processeur (1403) couplé à l'émetteur-récepteur (140) et à une interface réseau ; et
une mémoire (1407) couplée au processeur (1403), la mémoire (1407) comprenant un code de programme lisible par ordinateur intégré en son sein qui, lorsqu'il est exécuté par le processeur (1403), amène le processeur (1403) à réaliser des opérations comprenant :

l'identification d'une composante pilote reçue à l'intérieur d'un symbole de multiplexage par répartition orthogonale de la fréquence, OFDM, dans un signal reçu,
la détermination d'une composante pilote attendue qui aurait été reçue en l'absence de bruit de phase, dans laquelle la composante pilote attendue est déterminée sur la base d'un canal estimé et d'une composante pilote connue *a priori* d'un signal émis, et dans laquelle la composante pilote connue *a priori* est obtenue par l'application d'une transformée de Fourier discrète inverse, IDFT, sur uniquement des sous-porteuses pilotes de représentation dans le domaine fréquentiel du signal émis,
sur la base de la composante pilote reçue et de la composante pilote attendue, la génération d'une estimation d'une réalisation de bruit de phase pour différentes parties du symbole OFDM dans le signal reçu, échantillon par échantillon, sur la base de l'estimation de la réalisation du bruit de phase, la compensation du signal reçu pour le bruit de phase échantillon par échantillon à l'intérieur du symbole OFDM, et la modification de manière adaptative ou la désactivation de la compensation du signal reçu sur la base d'une détection d'un niveau de rapport signal sur bruit qui est inférieur à un niveau de seuil.

11. Équipement utilisateur, UE, comprenant :

un émetteur-récepteur (1501) configuré pour fournir des communications radio avec une pluralité de terminaux sans fil ;
un processeur (1503) couplé à l'émetteur-récepteur (1501) ; et
une mémoire (1507) couplée au processeur (1503), la mémoire (1507) comprenant un code de programme lisible par ordinateur intégré en son sein qui, lorsqu'il est exécuté par le processeur (1503), amène le processeur (1503) à réaliser des opérations comprenant :

l'identification d'une composante pilote reçue à l'intérieur d'un symbole de multiplexage par répartition orthogonale de la fréquence, OFDM, dans un signal reçu,
la détermination d'une composante pilote attendue qui aurait été reçue en l'absence de bruit de phase, dans lequel la composante pilote attendue est déterminée sur la base d'un canal estimé et d'une composante pilote connue *a priori* d'un signal émis, et dans lequel la composante pilote connue *a priori* est obtenue par l'application d'une transformée de Fourier discrète inverse, IDFT, sur uniquement des sous-porteuses pilotes de représentation dans le domaine fréquentiel du signal émis,
sur la base de la composante pilote reçue et de la composante pilote attendue, la génération d'une estimation d'une réalisation de bruit de phase pour différentes parties du symbole OFDM dans le signal reçu, échantillon par échantillon, sur la base de l'estimation de la réalisation du bruit de phase, la compensation du signal reçu pour le bruit de phase échantillon par échantillon à l'intérieur du symbole OFDM, et la modification de manière adaptative ou la désactivation de la compensation du signal reçu sur la base d'une détection d'un niveau de rapport signal sur bruit qui est inférieur à un niveau de seuil.

Frequency

OFDM
Symbol

12    $T_{CP}$    14    $T_{CP}$    12    10    12    Subcarriers

16

☐ Data
☒ Regular Pilot (RP)
▨ Phase Noise Pilot (PNP)

20

Time

$T_{RP}$    $T_{data}$

12

## FIGURE 1

Transmitting Node
30

Physical
channel

32

Receiving Node
34

Traditional Receiver Processor
42

Phase Noise Compensator
44

## FIGURE 2

```
┌─────────────────────────────────────────────────────┐
│        Perform DFT on time-domain received signal    │
│                        104                           │
└─────────────────────────────────────────────────────┘
                          │
                          ▼
┌─────────────────────────────────────────────────────┐
│              Zero out non-pilot subcarriers          │
│                        106                           │
└─────────────────────────────────────────────────────┘
                          │
                          ▼                                   100
┌─────────────────────────────────────────────────────┐
│                     Perform IDFT                     │
│                        110                           │
└─────────────────────────────────────────────────────┘
                          │
                          ▼
┌─────────────────────────────────────────────────────┐
│                Derive expected signal (z)            │
│                        112                           │
└─────────────────────────────────────────────────────┘
                          │
                          ▼
┌─────────────────────────────────────────────────────┐
│            Calculate phase difference (alpha)        │
│                        114                           │
└─────────────────────────────────────────────────────┘
                          │
                          ▼
┌─────────────────────────────────────────────────────┐
│      Derotate received signal based on phase difference │
│                        120                           │
└─────────────────────────────────────────────────────┘
                          │
                          ▼
┌─────────────────────────────────────────────────────┐
│            Proceed with regular signal processing    │
│                        122                           │
└─────────────────────────────────────────────────────┘
```

# FIGURE 3A

Perform CPE (and/or channel) compensation
102

Perform DFT on time-domain received signal
104

Zero out non-pilot subcarriers
106

Equalize
108

Perform IDFT
110

Derive expected signal (z)
112

Calculate phase difference (alpha)
114

Smoothen phase difference
116

Average phase difference over antennas
118

Derotate received signal based on phase difference
120

Proceed with regular signal processing
122

100'

# FIGURE 3B

200

LO

202
204

QUADRATURE
MIXER
206

LOW PASS
FILTER
208

ADC
210

PHASE NOISE
COMPENSATOR
44

FFT
212

DEMODULATOR
214

DECODER
216

*FIGURE 4*

2 GHz (5120 subcarriers), AWGN, 64QAM, 10 frames

FIGURE 5

## FIGURE 6

Identifying a pilot component in a received signal

1600

Determining an expected pilot component that would have been received in the absence of phase noise

1602

Based on the received pilot component and the expected pilot component, generating an estimate of the phase noise realization for different parts of an OFDM symbol in the received signal

1604

Based on the estimate of the phase noise realization, compensating the received signal for the phase noise

1606

## FIGURE 7

Base Station (BS)
1400

Transceiver
1401

Processor
1403

Network
Interface
1405

Memory
1407

# FIGURE 8

Base Station (BS)
1400

Pilot Identification Module
1420

Expected Pilot Determining Module
1430

Phase Noise Estimation Module
1440

Signal Compensation Module
1450

# FIGURE 9

User Equipment (UE)
1500

Transceiver
1501

Processor
1503

User Interface
1505

Memory
1507

# FIGURE 10

User Equipment (UE)
1500

Pilot Identification Module
1520

Expected Pilot Determining Module
1530

Phase Noise Estimation Module
1540

Signal Compensation Module
1550

# FIGURE 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130259174 A
- US 20070025461 A
- EP 2013056754 W

**Non-patent literature cited in the description**

- **A.G. ARMADA ; M. CALVO.** Phase noise and sub-carrier spacing effects on the performance of an OFDM communication system. *IEEE communication letters,* January 1998, vol. 2 (1

- Investigation of pilot-aided phase noise compensation in CO-OFDM system. **SICONG LIU et al.** COMMUNICATIONS AND PHOTONICS CONFERENCE AND EXHIBITION (ACP). IEEE, 08 December 2010